# EUROPÄISCHE PATENTSCHRIFT

(11) **EP 3 096 130 B1**
(45) Veröffentlichungstag und Bekanntmachung des Hinweises auf die Patenterteilung: **26.05.2021**
(21) Anmeldenummer: 15401100.1
(22) Anmeldetag: 12.10.2015
(51) Int. Cl.: G01N 21/53, G08B 17/107, G01N 21/47

(54) **VORRICHTUNG ZUR IDENTIFIKATION VON AEROSOLEN**
DEVICE FOR IDENTIFICATION OF AEROSOLS
DISPOSITIF DESTINE A L'IDENTIFICATION D'AEROSOLS

(30) Priorität: 13.10.2014 DE 102014114797
(43) Veröffentlichungstag der Anmeldung: 23.11.2016
(73) Patentinhaber: Universität Duisburg-Essen, 45141 Essen (DE)
(72) Erfinder: Schultze, Thorsten Robert Paul, 40885 Ratingen (DE); Krüll, Wolfgang, 47057 Duisburg (DE); Willms, Ingolf, 40699 Erkrath (DE)
(74) Vertreter: Nobbe, Matthias

(56) Entgegenhaltungen:
- EP-A1- 1 688 898
- DE-A1- 4 415 063
- DE-A1-102004 001 699
- US-A1- 2007 285 264
- WOLFGANG KRUELL ET AL: "Analysis of Dust Properties to Solve the Complex Problem of Non-fire Sensitivity Testing of Optical Smoke Detectors", PROCEDIA ENGINEERING, Bd. 62, 17. Oktober 2012 (2012-10-17), Seiten 859-867, XP055301441, AMSTERDAM, NL ISSN: 1877-7058, DOI: 10.1016/j.proeng.2013.08.136

## Beschreibung

Die Erfindung betrifft eine Vorrichtung zur Identifikation von Aerosolen, umfassend einen mit der Umgebungsluft der Vorrichtung in Fluidverbindung stehenden Streubereich, eine Lichtemissionseinrichtung mit einer ersten optischen Achse, zumindest eine erste Lichtdetektionseinrichtung mit einer zweiten optischen Achse und eine Mess- und Recheneinrichtung, wobei die Lichtemissionseinrichtung Licht in den Streubereich abstrahlt und durch Streulichteinfall von der mindestens einen Lichtdetektionseinrichtung erzeugte Detektionssignale an die Mess- und Recheneinrichtung übertragen werden.

Aus der WO 2014/037520 A1 ist eine Vorrichtung zum Detektieren von Streulichtsignalen bekannt, welche eine Vielzahl von optischen Sensoren umfasst, die in unterschiedlichen Streuwinkeln in der Streuebene angeordnet sind und von denen mindestens einer als Referenzsensor dient. Die optischen Sensoren können Polarisationsfilter aufweisen. Aus den Messsignalen der Sensoren werden Kurven erstellt, welche mit abgespeicherten Kurven mittels einer Hauptkomponentenanalyse verglichen werden, um die Partikel zu identifizieren, d.h. um zu bestimmen, um welche Partikel es sich handelt. Diese Vorrichtung kann als Feueralarmgeber Anwendung finden.

Aus der US 5 280 272 A ist eine Vorrichtung zur Messung von Streulicht bekannt, welche als Bestandteil eines Feueralarmsystems Anwendung finden soll. Die Vorrichtung umfasst mehrere unter unterschiedlichen Winkeln in der Streuebene angeordnete optische Sensoren oder einen in der Streuebene beweglichen optischen Sensor, welcher in unterschiedliche Winkelstellungen gefahren werden kann. Die Streulichtmessung erfolgt bei den Winkeln 30°, 60°, 90° und 120°. Die optischen Sensoren können mit Polarisationsfiltern ausgestattet sein, deren Polarisationsebene fest vorgegeben ist oder die durch einen Stellmotor drehbar sind, sodass deren Polarisationsebene einstellbar ist. Die erhaltenen Messsignale werden mit gespeicherten Werten verglichen, um zu bestimmen, um welche Art Rauch es sich handelt.

Aus der US 5 576 697 A ist ebenfalls eine Streulichtvorrichtung bekannt, welche als Bestandteil eines Feueralarmsystems Anwendung finden soll. Die Vorrichtung umfasst zwei Lichtquellen, welche linear polarisiertes Licht abstrahlen, wobei die Polarisationsebene des Lichtes einer Lichtquelle parallel zur Streuebene orientiert ist und die Polarisationsebene des Lichtes der anderen Lichtquelle senkrecht zur Streuebene orientiert ist. Die Vorrichtung umfasst ferner zwei optische Sensoren, die jeweils mit einem Polarisationssensor ausgestattet sind, wobei die Polarisationsebene eines Polarisationsfilters parallel zur Streuebene und die Polarisationsebene des anderen Polarisationsfilters senkrecht zur Streuebene orientiert ist. Die erhaltenen Messwerte werden mit gespeicherten Werten verglichen, um die Art des Rauches zu bestimmen.

Aus der EP 0 926 646 A1 ist ein optischer Rauchmelder bekannt, welcher ein Gehäuse aufweist, in dem eine Messkammer ausgebildet und eine Lichtquelle sowie ein Lichtempfänger angeordnet sind. In der Messkammer sind ferner Blenden angeordnet, um sicher zu stellen, dass ausschließlich an in der Messkammer befindlichen Partikeln gestreutes Streulicht zu dem Lichtempfänger gelangt. Der Rauchmelder zeichnet sich ferner dadurch aus, dass er Licht des sichtbaren Bereiches des Spektrums abstrahlt.

Aus der EP 0 877 345 A2 ist ein Rauchsensor bekannt, welcher einen Lichtempfänger aufweist, der zeitlich versetzt Licht zweier unterschiedlicher Wellenlängen empfängt. Die Art des Rauches kann durch einen Vergleich eines gemessenen Verhältnisses der Lichtintensitäten der beiden Wellenlängen mit einem gespeicherten Wert dieses Verhältnisses erfolgen.

Aus der EP 1 022 700 A2 ist ein Verfahren zur Auswertung von mit einem Streulichtsystem eines mit einem Mikroprozessor ausgestatteten Brandmelders unter zwei Streuwinkeln gemessenen Streusignalen bekannt, aus denen ein mit einer Alarmschwelle zu vergleichender Alarmwert gewonnen wird, wobei der Alarmwert in Abhängigkeit von dem Verhältnis der Streusignale bestimmt wird. Dabei kann vorgesehen sein, dass ein Streuwinkel etwa 70° beträgt.

Aus der JP 2011-203 889 A ist ein Rauchmelder bekannt, bei welchem sich das Detektionsvolumen außerhalb eines Gehäuses befindet, wobei der Winkel zwischen der optischen Achse der Lichtemissionseinrichtung und der optischen Achse der Lichtdetektionseinrichtung < 30° beträgt. Je größer der Abstand zwischen dem Gehäuse und dem Detektionsvolumen - und damit zwischen der Lichtemissionseinrichtung und der Lichtdetektionseinrichtung einerseits, welche beide in dem Gehäuse des Rauchmelders angeordnet sind, und dem Detektionsvolumen andererseits - ist, desto kleiner ist der Winkel. Mittels dieses Rauchmelders soll Rauch bereits detektiert werden können, bevor er die Decke eines Raumes, an welcher gattungsgemäße Rauchmelder zumeist angeordnet sind, erreicht, was letztlich zu der Möglichkeit einer schnelleren Alarmgebung führt.

US 4 693 602 A beschreibt eine Messvorrichtung zur Identifizierung luftgetragener Partikel. Die Messvorrichtung hat die Form einer Halbkugel. Das Streulicht wird unter verschiedensten Winkeln gemessen und ausgewertet, wobei zur Auswertung insbesondere unter den Winkeln 20° und 160° eine Integration der Intensität über den Azimutalwinkel erfolgt, um Partikel zu identifizieren. Mit der Integration sollen auch kleinere Partikel, welche nur einen kleinen Wirkungsquerschnitt haben, identifizieren werden können.

Aus der EP 1 688 898 A1 ist ein Rauchmelder bekannt, der durch Betrachtung von Polarisationsrichtungen und Streuwinkeln des Lichts die Unterscheidung zwischen verschiedenen Raucharten sowie Wasserdampf erlaubt.

DE 44 15 063 A1 beschreibt ein Feueralarmsystem, welches die Rauchart aus polarisierten Komponenten des gestreuten Lichts ermittelt, um ein Feuer aufgrund des von Rauch gestreuten Lichts unter Berücksichtigung der Art des Rauchs zu erkennen.

Die aus dem Stand der Technik bekannten Vorrichtungen und Verfahren zur Identifikation von Aerosolen weisen den Nachteil auf, dass nicht durch einen Brand entstandene Aerosole nicht mit ausreichender Sicherheit von durch einen Brand entstandenen Aerosolen unterschieden werden können. Nicht durch einen Brand entstandene Aerosole sind insbesondere Wasserdampf, Wassernebel einerseits und Stäube aus unterschiedlichen Materialien andererseits. Dementsprechend besteht bei Rauchmeldern gemäß den aus dem Stand der Technik bekannten Vorrichtungen und Verfahren eine Täuschungsmöglichkeit, was zu entsprechend häufig auftretenden Fehlalarmen führt, welche wiederum erhöhte Kosten verursachen, da bei einem Fehlalarm nichtsdestotrotz der dem Fehlalarm zugeordnete Ort durch Personal in Augenschein genommen werden muss. Insbesondere bei Industrieanlagen und in der Luftfahrt ist die Luft häufig mit Staub oder Wasserdampf angereichert, sodass es häufig zu Fehlalarmen kommt.

Der Erfindung liegt daher die Aufgabe zu Grunde, eine Vorrichtung und ein Verfahren unter Verwendung dieser Vorrichtung anzugeben, mit denen Staubpartikel und Wasserpartikel (Wasserdampf und Wassernebel) zuverlässig identifiziert werden können, d.h. von durch einen Brand entstandenen Aerosolen unterschieden werden können. Der Erfindung liegt ferner die Aufgabe zu Grunde, eine Vorrichtung anzugeben, mit der zuverlässig nicht durch einen Brand entstandene Staubpartikel von durch einen Brand entstandenen Aerosolen unterschieden werden können.

Die Lösung der Aufgabe der Erfindung besteht darin, eine Vorrichtung mit den Merkmalen des Hauptanspruches bereitzustellen. Die Erfindung umfasst, dass die erste optische Achse und die zweite optische Achse einen Winkel von 35° ± 3° einschließen, dass die Lichtemissionseinrichtung wenigstens eine erste Lichtquelle umfasst und dass die Mess- und Recheneinrichtung aus den Detektionssignalen einen Wert eines Intensitätenquotienten, berechnet, den Wert mit gespeicherten Werten vergleicht und abhängig von dem Vergleich ein Identifikationssignal ausgibt. Fluidverbindung bedeutet dabei, daß ein Luftaustausch zwischen dem Streubereich und der Umgebung der Vorrichtung stattfinden kann, so daß die Luft im Streubereich in bewegter Verbindung mit der Umgebung der Vorrichtung steht.

Weitere vorteilhafte Ausgestaltungen und Konkretisierungen der Erfindung ergeben sich aus den Unteransprüchen.

Die Erfindung umfasst zwei Teilaspekte. Der erste Teilaspekt besteht in einer zuverlässigen Identifikation von Wasserdampf oder Wassernebel, wobei eine besondere Eigenschaft des Wassers, nämlich der Dipolcharakter der Wassermoleküle, nutzbar gemacht wird. Dabei werden die Lichtemissionseinrichtung und die Lichtdetektionseinrichtung derart angeordnet, dass deren optische Achsen einen Winkel von 35° ± 3° einschließen, wobei die Lichtemissionseinrichtung wenigstens eine erste Lichtquelle umfasst, welche linear polarisiertes Licht mit einer ersten Polarisationsebene abstrahlen kann. Mittels der unter einem Winkel von 35° zur Lichtemissionseinrichtung angeordneten Lichtdetektionseinrichtung erfolgt beispielsweise eine Bestimmung der Intensitäten des in dem Streubereich gestreuten Streulichtes unterschiedlicher Polarisation, wobei aus diesen Intensitäten ein Polarisationsmaß σ_{Pol} durch die Mess- und Recheneinrichtung berechnet wird. Diesem Teilaspekt der Erfindung liegt die Erkenntnis zugrunde, dass das von Wassertröpfchen unter einem Winkel von 35° gestreute Licht stark polarisiert ist, wie dies z.B. auch bei als Regenbogen wahrnehmbaren Streulicht der Fall ist. Das polarisierte Licht eines Regenbogens erscheint dem Betrachter unter einem Winkel von 42° zu der einfallenden Sonnenstrahlung. Erfindungsgemäß wird ein Winkel von 35° zwischen der optischen Achse der Lichtemissionseinrichtung und der optischen Achse der Lichtdetektionseinrichtung gewählt, weil der Polarisationseffekt von Wassertröpfchen bei sehr kleinen Wassertröpfchen mit Durchmessern im Bereich zwischen ca. 0,1 µm und einigen Hundert µm am ausgeprägtesten ist. Die Mess- und Recheneinrichtung vergleicht die aus den Lichtintensitäten unterschiedlicher Polarisation gewonnenen Werte eines Polarisationsmaßes σ_{Pol} mit gespeicherten Werten dieses Polarisationsmaßes σ_{Pol} und gibt abhängig von dem Vergleich ein Identifikationssignal aus. Ein Polarisationsmaß im Sinne der Erfindung ist ein Maß dafür, wie sehr eine bestimmte Polarisation (bei gleichen oder verschiedenen Winkeln) eine oder mehrere andere Polarisationen überwiegt und wird bevorzugt aus dem Betrag der Intensität der bestimmten Polarisation, um welchen die Intensität der anderen Polarisation oder Polarisationen überschritten wird, und der Summe der Intensitäten der bestimmten Polarisation und der oder den anderen Polarisationen durch Division berechnet. Üblicherweise wird das Polarisationsmaß aus zwei Polarisationen berechnet, deren Polarisationsebenen einen Winkel von 90° ± 5° einschließen, beispielsweise die Polarisationen, deren Polarisationsebenen senkrecht und parallel zu einer Streuebene orientiert sind. Jedoch sind auch andere Intensitätsquotienten zur Identifikation von Wassertröpfchen (Wasserdampf oder Wassernebel) geeignet, beispielsweise der Quotient aus Lichtintensitäten gleicher Polarisation bei verschiedenen Winkeln, wozu freilich zwei Lichtdetektionseinrichtungen vorhanden sein müssen.

Ein zweiter Teilaspekt der Erfindung betrifft die Identifikation verschiedener Stäube derart, dass nicht durch einen Brand entstandene Stäube von durch einen Brand entstandenen Aerosolen unterschieden werden. Dabei wird die Erkenntnis genutzt, dass nicht durch einen Brand entstandene Stäube einfallendes Licht mit einer bestimmten Polarisation depolarisieren, d.h. dass bei einer Streuung des einfallenden Lichtes an Staubaerosolen die Polarisation eines Anteils des gestreuten Lichtes gegenüber der Polarisation des einfallenden Lichtes verändert ist. Dieser Depolarisationseffekt ist bei nicht durch einen Brand entstandenen Stäuben deutlich größer als bei durch einen Brand entstandenen Aerosolen. Dieser Effekt ist dadurch zu erklären, dass die bei einem Brand entstehenden Aerosole im Wesentlichen eine sphärische Form aufweisen oder aus Agglomeraten sphärischer Form aus kleineren Partikeln bestehen, wohingegen die nicht durch einen Brand entstandenen Stäube wenigstens zu einem signifikanten Anteil keine solche Symmetrie aufweisen, sodass es bei der Streuung von Licht an einem solchen Staubpartikel zu Mehrfachstreuungen kommen kann, womit wiederum eine Änderung der Polarisation einhergeht. Daher können durch die Depolarisation des einfallenden Lichtes bei der Streuung Stäube, die nicht durch einen Brand entstanden sind, von durch einen Brand entstandenen Aerosolen unterschieden werden. Zur Identifikation von nicht durch einen Brand entstandenen Stäuben kann vorgesehen sein, dass die Mess- und Recheneinrichtung einen Intensitätenquotienten in Form eines Depolarisationsgrades σ_{Depol} berechnet und den berechneten Wert mit gespeicherten Werten von σ_{Depol} vergleicht. Abhängig von dem Vergleich gibt die Mess- und Recheneinrichtung ein Identifikationssignal aus. Für die Berechung des Depolarisationsgrades σ_{Depol} ist zumindest eine Lichtquelle erforderlich, welche linear polarisiertes Licht mit einer ersten Polarisationsebene abstrahlt.

Dieser zweite Teilaspekt kann dadurch verwirklicht werden, dass die erste Lichtquelle linear polarisiertes Licht mit einer ersten Polarisationsebene abstrahlt. Polarisiertes Licht ist erforderlich, um ein Depolarisationsgrad σ_{Depol} zu ermitteln.

Der Vergleich der berechneten Werte von σ_{Pol} und σ_{Depol} mit gespeicherten Werten kann anhand eines Schwellenwertes erfolgen, sodass genau dann ein Identifikationssignal von der Mess- und Recheneinrichtung ausgegeben wird, wenn der berechnete Wert des Depolarisationsgrades den gespeicherten Schwellenwert überschreitet.

Erfindungsgemäß ist vorgesehen, dass die Vorrichtung bei der Detektion von Bränden Anwendung findet, wobei ein Alarm nur dann ausgelöst wird, wenn die Mess- und Recheneinrichtung kein Identifikationssignal ausgibt, d.h. wenn die in dem Streubereich befindlichen Aerosole weder nicht durch einen Brand entstandene Stäube noch Wasserpartikel sind.

Bevorzugt schließen die erste optische Achse der Lichtemissionseinrichtung und die zweite optische Achse der Lichtdetektionseinrichtung einen Winkel von 35°± 3°, besonders 35°± 1° ein. Im Idealfall schließen die beiden optischen Achsen für die gemessenen Partikel einen Winkel von genau 35° ein, wobei fertigungsbedingte Toleranzen eingeschlossen sein sollen. Der optimale Winkel kann bei größeren Wasserpartikeln etwas größer als 35°, d.h. bis zu + 3°sein.

Die erste Polarisationsebene des von der Lichtemissionseinrichtung abgestrahlten, linear polarisierten Lichtes ist bevorzugt senkrecht oder parallel zu der durch die erste und zweite optische Achse aufgespannten Ebene (Streuebene) orientiert. Die weiter unten präsentierten Messdaten wurden mit experimentellen Anordnungen erhalten, bei denen die erste Polarisationsebene senkrecht oder parallel zu der durch die erste und zweite optische Achse aufgespannten Ebene orientiert ist. Allerdings ist die Orientierung der ersten Polarisationsebene nicht darauf beschränkt, sodass die erfindungsgemäße Identifikation von Aerosolen auch mit davon abweichenden Orientierungen prinzipiell möglich ist.

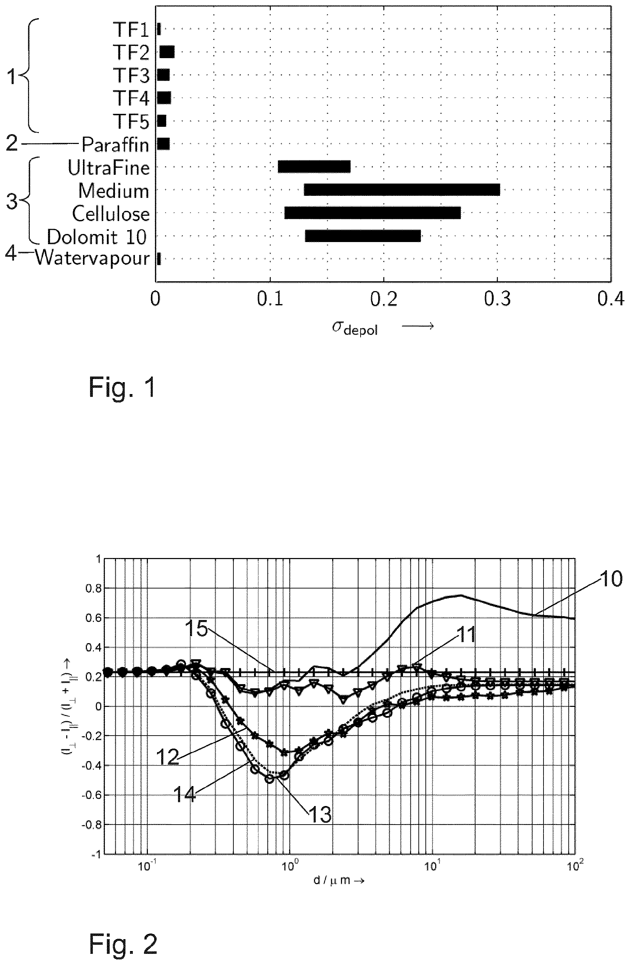

Das Polarisationsmaß σ_{Pol} wird bevorzugt gemäß der Formel σ_{Pol}=(I_{S}-I_{P})/(I_{S}+I_{P}) berechnet und der Depolarisationsgrad σ_{Depol} wird bevorzugt gemäß σ_{Depol}=I_{S}/I_{P} oder σ_{Depol}=I_{P}/I_{S} berechnet, wobei I_{S} die Intensität des Lichtes ist, welches linear polarisiert ist und eine Polarisationsebene aufweist, die mit der durch die erste und zweite optische Achse aufgespannten Ebene (Streuebene) einen Winkel von 90° ± 5° einschließt, und wobei I_{P} die Intensität des Lichtes ist, welches linear polarisiert ist und eine Polarisationsebene aufweist, die mit der durch die erste und zweite optische Achse aufgespannten Ebene einen Winkel von 0° ± 5° einschließt. Der Berechnung des Polarisationsmaßes σ_{Pol} und des Depolarisationsgrades σ_{Depol} gemäß der oben genannten Formeln liegt ebenfalls eine experimentelle Anordnung zugrunde, bei welcher die erste Polarisationsebene, also die des Lichtes der ersten Lichtquelle der Lichtemissionseinrichtung, senkrecht oder parallel zu der Streuebene orientiert ist. Die Berechnung des Polarisationsmaßes σ_{Pol} und Depolarisationsgrades σ_{Depol} kann dann einfach mittels der Intensität des Streulichtes mit einer Polarisation senkrecht zu der Streuebene und der Intensität des Lichtes mit einer Polarisation parallel zu der Streuebene erfolgen. Das so berechnete Polarisationsmaß σ_{Pol} ist bei einer Streuung des von der Lichtemissionseinrichtung abgestrahlten Lichtes an Wassertröpfchen von der Streuung an durch einen Brand entstandenen Aerosolen signifikant verschieden, sodass eine Unterscheidung beider Aerosolarten möglich ist. Diesbezüglich wird auf die Figuren 1 bis 3 verwiesen. Dabei ist die Berechnung von σ_{Depol} gemäß σ_{Depol}= I_{S}/I_{P} oder gemäß σ_{Depol}=I_{P}/I_{S} von der Polarisationsebene der Lichtquelle abhängig. Es sollten die Intensitätswerte des Lichtes mit einer Polarisationsebene, welche senkrecht zu der Polarisationsebene der Lichtquelle orientiert ist, im Verhältnis zu den Intensitätswerten des Lichtes mit einer Polarisationsebene, welche parallel zu der Polarisationsebene der Lichtquelle orientiert ist, betrachtet werden.

Der gemäß der oben genannten Formeln berechnete Depolarisationsgrad σ_{Depol} kann herangezogen werden, um nicht durch einen Brand entstandene Stäube von durch einen Brand entstandenen Aerosolen zu unterscheiden, da, wie oben bereits ausgeführt, nicht durch einen Brand entstandene Stäube eine Depolarisation des von den Staubpartikeln gestreuten Lichtes bewirken, wobei zur Messung dieser Eigenschaft einfallendes Licht mit einer wohldefinierten Polarisation erforderlich ist.

In einer Ausgestaltung der Erfindung umfasst die Lichtemissionseinrichtung neben der ersten Lichtquelle eine zweite Lichtquelle, wobei die erste Lichtquelle polarisiertes und die zweite Lichtquelle unpolarisiertes Licht abstrahlt. Dies bedeutet, dass die zweite Lichtquelle Licht mit allen möglichen Polarisationen abstrahlt. Anhand der Streuung dieses unpolarisierten Lichtes an Aerosolen kann durch Berechnung des Polarisationsmaßes σ_{Pol} ermittelt werden, ob es sich bei den Aerosolen um Wassertröpfchen handelt, wobei das Polarisationsmaß σ_{Pol} bevorzugt gemäß der oben genannten Formel berechnet wird, d.h. dass das Polarisationsmaß σ_{Pol} aus dem Anteil der unter dem Winkel von 35° gestreuten Gesamtintensität, welcher senkrecht zur Streuebene orientiert ist, und dem Anteil, welcher parallel zur Streuebene polarisiert ist, berechnet wird. Bevorzugt ist die erste Polarisationsebene des von der ersten Lichtquelle abgestrahlten Lichtes senkrecht oder parallel zu der Streuebene orientiert.

Bei dieser Konfiguration der Lichtemissionseinrichtung umfasst die erste Lichtdetektionseinrichtung bevorzugt einen ersten Lichtempfänger und einen zweiten Lichtempfänger mit jeweils einem linearen Polarisationsfilter, wobei die Polarisationsebene eines Polarisationsfilters mit der durch die erste und zweite optische Achse aufgespannten Ebene einen Winkel von 90° ± 5° einschließt und die Polarisationsebene des anderen Polarisationsfilters mit der durch die erste und zweite optische Achse aufgespannten Ebene einen Winkel von 0° ± 5° einschließt. Die letztgenannte Konfiguration der Lichtemissionseinrichtung und die letztgenannte Konfiguration der Lichtdetektionseinrichtung bilden zusammen eine erste bevorzugte Ausführungsform der Erfindung, wobei der Depolarisationsgrad σ_{Depol} mithilfe des von der ersten Lichtquelle abgestrahlten Lichtes mit wohldefinierter Polarisation und mithilfe des Lichtempfängers, dessen Polarisationsfilter eine Polarisationsebene senkrecht zu der Polarisationsebene des Lichtes der ersten Lichtquelle aufweist, berechnet wird. Das Polarisationsmaß wird mithilfe des Lichtes der zweiten Lichtquelle ohne wohldefinierte Polarisationsebene und den beiden Lichtempfängern berechnet. Es kann jedoch auch vorgesehen sein, dass die Lichtemissionseinrichtung nur eine Lichtquelle umfasst, welche unpolarisiertes Licht abstrahlt. In diesem Fall dient die Vorrichtung nur der Identifikation von Wassertröpfchen, da nur das Polarisationsmaß σ_{Pol} ermittelt wird.

Weiter ist es gemäß einer weiteren Ausführungsform der Erfindung möglich, dass die Lichtemissionseinrichtung eine zweite Lichtquelle umfasst, welche linear polarisiertes Licht abstrahlt, wobei die Polarisationsebene des von der zweiten Lichtquelle abgestrahlten Lichtes mit der Polarisationsebene des von der ersten Lichtquelle abgestrahlten Lichtes einen Winkel von 90° ± 5° einschließt. Bei dieser Konfiguration der Lichtemissionseinrichtung sind zwei Lichtquellen vorhanden, welche beide Licht mit einer wohldefinierten Polarisationsebene abstrahlen, und wobei beide Polarisationsebenen einen Winkel von 90° ± 5° einschließen. Bevorzugt ist dabei die Polarisation des Lichtes der ersten Lichtquelle senkrecht oder parallel zu der durch die erste und zweite optische Achse aufgespannten Ebene orientiert und die Polarisationsebene des von der zweiten Lichtquelle abgestrahlten Lichtes entsprechend parallel oder senkrecht zu dieser Ebene orientiert.

Bei dieser Konfiguration der Lichtemissionseinrichtung umfasst die Lichtdetektionseinrichtung bevorzugt einen ersten Lichtempfänger mit einem linearen Polarisationsfilter und einen zweiten Lichtempfänger, welcher keinen Polarisationsfilter aufweist, wobei die Polarisationsebene des Polarisationsfilters mit der durch die erste und zweite optische Achse aufgespannten Ebene einen Winkel von 90° ± 5° oder 0° ± 5° einschließt, d.h. senkrecht oder parallel zu dieser Ebene orientiert ist. Die letztgenannte Konfiguration der Lichtemissionseinrichtung und die letztgenannte Konfiguration der Lichtdetektionseinrichtung bilden zusammen eine zweite bevorzugte Ausführungsform der erfindungsgemäßen Vorrichtung. Es kann jedoch auch vorgesehen sein, dass die Lichtdetektionseinrichtung nur einen Lichtempfänger ohne Polarisationsfilter umfasst. In diesem Fall dient die Vorrichtung nur der Identifikation von Wassertröpfchen, da nur das Polarisationsmaß σ_{Pol} ermittelt wird.

Ferner besteht die Möglichkeit, dass eine zweite Lichtdetektionseinrichtung mit einer dritten optischen Achse und zumindest einem Lichtempfänger vorhanden ist, wobei die durch die erste und dritte optische Achse aufgespannte Ebene mit der durch die erste und zweite optische Achse aufgespannten Ebene einen Winkel von 90° ± 5° einschließt und wobei die erste optische Achse mit der dritten optischen Achse einen Winkel von 35° ± 5° oder 90° ± 5°.

So ist bei einer dritten bevorzugten Ausführungsform vorgesehen, dass die erste Lichtdetektionseinrichtung einen ersten Lichtempfänger und einen zweiten Lichtempfänger umfasst, von denen einer einen Polarisationsfilter aufweist, dessen Polarisationsebene mit der ersten Polarisationsebene des von der ersten Lichtquelle abgestrahlten Lichtes einen Winkel von 90° ± 5° einschließt, dass die zweite Lichtdetektionseinrichtung einen dritten Lichtempfänger ohne Polarisationsfilter umfasst, und dass die erste optische Achse (304) mit der dritten optischen Achse (322) einen Winkel von 35° ± 5° einschließt. Die Lichtemissionseinrichtung umfasst bei dieser Ausführungsform nur die erste Lichtquelle, welche linear polarisiertes Licht mit der ersten Polarisationsebene abstrahlt, wobei die erste Polarisationsebene bevorzugt senkrecht oder parallel zu der durch die erste und zweite optische Achse aufgespannten Ebene orientiert ist. Bei dieser Ausführungsform kann auch vorgesehen sein, dass die erste Lichtdetektionseinrichtung nur einen Lichtempfänger ohne Polarisationsfilter umfasst. In diesem Fall dient die Vorrichtung nur der Identifikation von Wassertröpfchen, da nur das Polarisationsmaß σ_{Pol} ermittelt wird.

Bei allen genannten bevorzugten Ausführungsformen erfolgt die Berechnung des Depolarisationsgrades σ_{Depol} und des Polarisationsmaßes σ_{Pol} durch die Recheneinheit gemäß der oben genannten Formeln, welche sich bei experimentellen Messungen bereits zur Identifikation von Aerosolen, insbesondere zur Unterscheidung von nicht durch Brände entstandenen Stäuben und durch Brände entstandene Aerosole einerseits, und von Wassertröpfchen und durch Brände entstandene Aerosole andererseits, bewährt haben. Wie in Zusammenhang mit diesen vier Ausführungsformen gesagt wurde, kann auch nur das Polarisationsmaß σ_{Pol} ermittelt werden, wobei die Lichtemissionseinrichtung oder die Lichtdetektionseinrichtung entsprechend einfacher ausgelegt sind, d.h. die Ermittlung von Depolarisationsgrad σ_{Depol} und Polarisationsmaß σ_{Pol} erfordert zusätzliche Komponenten.

Ferner kann bevorzugt vorgesehen sein, dass, sofern zwei Lichtquellen vorhanden sind, diese im Zeitmultiplex arbeiten, d.h. zeitlich versetzt Licht abstrahlen. Grundsätzlich ist jedoch auch ein anderes Multiplexing denkbar, wie z.B. Wellenlängenmultiplex, d.h. dass die Lichtquellen Licht unterschiedlicher Wellenlängen abstrahlen.

Weiter kann vorgesehen sein, dass die erste Lichtquelle oder die zweite Lichtquelle vorzugsweise aus einer Leuchtdiode mit Polarisationsfilter oder einem Laser, insbesondere einer Laserdiode bestehen, wobei Halbleiterlaser aufgrund der Möglichkeit, sie in sehr geringer Größe auszuführen, bevorzugt Anwendung finden. Bei dem ersten, zweiten und/oder dritten Lichtempfänger kann es sich um Fotodioden handeln, welche ebenfalls Halbleiterbauelemente sind, die aufgrund der Möglichkeit, sie in geringer Größe auszuführen und wegen ihrer hohen Empfindlichkeit, bevorzugt Anwendung finden. Grundsätzlich sind jedoch auch andere Lichtempfänger möglich, wie CCDs (Charge Coupled Devices) und Fotomultiplier. Ferner handelt es sich bei den in der Vorrichtung zur Anwendung kommenden Polarisationsfiltern bevorzugt um solche, welche aus einem monokristallinen oder polykristallinen Feststoff oder aus langkettigen Polymermolekülen bestehen. Es ist aber auch möglich, eine Flüssigkristallanordnung, wie sie von LCDs (Liquid Crystal Displays) bekannt ist, zu verwenden.

Das von der Lichtemissionseinrichtung abgestrahlte Licht ist ferner vorzugsweise Licht des langwelligen sichtbaren Bereiches des Spektrums oder Licht des nahen Infrarotbereiches des Spektrums, da entsprechende Lichtquellen preisgünstig verfügbar sind und die zu beobachtenden Effekte in diesen Bereichen des Spektrums besonders ausgeprägt sind. Es kann Licht aus dem gesamten sichtbaren Bereich des Spektrums (einzelne Wellenlängen oder Wellenlängenbereiche) oder auch weißes Licht verwendet werden.

Die Erfindung betrifft ebenfalls eine Verwendung der Vorrichtung mit den oben geschilderten Merkmalen bei der Detektion von Bränden, wobei die Vorrichtung in ein Gehäuse integriert ist.

Alle angegebenen Winkel, die sich auf optische Achsen, Polarisationsebenen oder Ebenen beziehen, sind idealerweise bei der Ausführung der Erfindung wie oben angegeben exakt erfüllt. Jedoch ist die Erfindung auch mit geringfügigen Winkelabweichungen durchführbar, weswegen alle angegebenen Mittelwerte als mit einem Intervall von jedenfalls ±5°, vorzugsweise von ±3°, und ganz besonders ±1° erfindungsgemäß verwendbar sind.

Abschließend wird auf den besonderen Vorteil der erfindungsgemäßen Vorrichtung hingewiesen, dass die Identifikation von Aerosolen mittels des Polarisationsmaßes σ_{Pol} und Depolarisationsgrades σ_{Depol} durch sehr einfache Rechenoperationen erfolgt, sodass die Mess- und Recheneinrichtung aus einfachen, kostengünstigen und wenig Strom verbrauchenden Komponenten bestehen kann. Ferner erfolgt die Identifikation von Aerosolen aufgrund dieser Tatsache sehr schnell, was ein weiterer Vorteil der erfindungsgemäßen Vorrichtung ist.

Die Erfindung wird im Weiteren anhand der Figuren näher erläutert.

Es zeigt
- Fig. 1: Werte des Depolarisationsgrades σ_{Depol} von verschiedenen Aerosolen gestreuten Lichtes,
- Fig. 2: durch Simulation ermittelte Werte des Polarisationsmaßes σ_{Pol} von an verschiedenen Aerosolen gestreuten Lichtes als Funktion des Aerosolpartikel-Durchmessers d,
- Fig. 3: Werte der normierten Auftrittswahrscheinlichkeit von an verschiedenen Aerosolen gestreuten Lichtes als Funktion des Polarisationsmaßes σ_{Pol},
- Fig. 4: eine Prinzipskizze einer ersten Ausführungsform der Erfindung,
- Fig. 5: eine Prinzipskizze einer zweiten Ausführungsform der Erfindung,
- Fig. 6: eine Prinzipskizze einer dritten Ausführungsform der Erfindung,
- Fig. 7: eine Prinzipskizze eines nicht der Erfindung entsprechenden Beispiels und
- Fig. 8: Werte der normierten Auftrittswahrscheinlichkeit von an verschiedenen Aerosolen gestreuten Lichtes als Funktion eines Intensitätsquotienten.

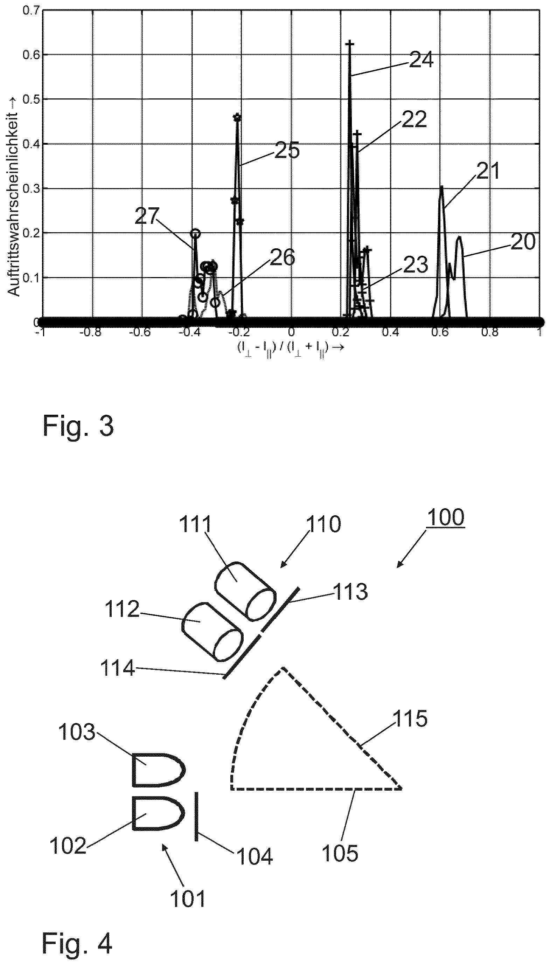

Dabei zeigen die Figuren 4 bis 7 Ausführungsformen der Erfindungen, wie sie im Hauptanspruch und den davon abhängigen Unteransprüchen definiert sind. Die Ausführungsform gemäß dem unabhängigen Patentanspruch 3 und den davon abhängigen Unteransprüchen ist in den Figuren nicht dargestellt, erschließt sich dem Fachmann jedoch aufgrund der Beschreibung unter Zuhilfenahme der Figurenbeschreibung insgesamt.

Figur 1 zeigt den gemessenen Depolarisationsgrad σ_{Depol} verschiedener nicht durch Brände entstandener Aerosole 2, 3, 4 und Brandaerosole 1. In Figur 1 ist σ_{Depol} auf der x-Achse aufgetragen. Die mit den verschiedenen Aerosolen erhalten Werte für σ_{Depol} sind in dem Diagramm in Richtung der y-Achse voneinander beabstandet eingetragen. Das Bezugszeichen 1 bezeichnet die Messwerte von σ_{Depol}, welche bei verschiedenen Brandaerosolen nach EN-54 (EN-54 -TF1, - TF2, - TF3, -TF4, -TF5) erhalten wurden. Das Bezugszeichen 2 bezeichnet Messwerte von σ_{Depol}, welche bei Paraffinölnebel (nach EN-54) erhalten wurden.

Das Bezugszeichen 3 bezeichnet Messwerte von σ_{Depol}, welche bei verschiedenen Stäuben erhalten wurden. Das Bezugszeichen 4 bezeichnet Messwerte von σ_{Depol}, welche bei Wassernebel und Wasserdampf erhalten wurden. Es ist deutlich zu erkennen, dass die Messwerte 3 im Bereich 0,1 < σ_{Depol} < 0,3 liegen, wohingegen die Messwerte 1, 2 und 4 im Bereich σ_{Depol} < ca. 0,02 liegen, sodass nicht durch Brände entstandene Stäube von Brandaerosolen anhand des Depolarisationsgrades σ_{Depol} eindeutig voneinander unterschieden werden können.

Figur 2 zeigt ein Diagramm, in dem simulierte Messwerte eines Polarisationsmaßes σ_{Pol} als Funktion des Durchmessers d der Aerosolpartikel dargestellt sind. Zur Berechnung des Polarisationsmaßes σ_{Pol} wurde von einer experimentellen Anordnung ausgegangen, bei der die Polarisationsebene des von der ersten Lichtquelle der Lichtemissionseinrichtung abgestrahlten Lichtes parallel oder senkrecht zu der durch die erste und zweite optische Achse aufgespannten Ebene orientiert ist. Das Polarisationsmaß σ_{Pol} wurde gemäß der oben genannten Formel σ_{Pol}=(I_{S}-I_{P})/(I_{S}+I_{P}) berechnet. Die Simulation wurde für sechs verschiedene Aerosole durchgeführt. Das Bezugszeichen 10 bezeichnet den Verlauf des Polarisationsmaßes σ_{Pol} für Wassertröpfchen, welche ausschließlich aus Wasser bestehen. Das Bezugszeichen 11 bezeichnet den Verlauf des Polarisationsmaßes σ_{Pol} für Wassertröpfchen, die zu 97% aus Wasser und zu 3% aus Ruß bestehen (jeweils Massenanteile). Das Bezugszeichen 12 bezeichnet den Verlauf des Polarisationsmaßes σ_{Pol} für Paraffinölnebel. Das Bezugszeichen 13 bezeichnet den Verlauf des Polarisationsmaßes σ_{Pol} für Aerosole, die bei einem Schwelbrand von Baumwolldochten entstanden sind. Das Bezugszeichen 14 bezeichnet den Verlauf des Polarisationsmaßes σ_{Pol} für Aerosole, die bei einer Holzpyrolyse entstanden sind. Das Bezugszeichen 15 bezeichnet den Verlauf des Polarisationsmaßes σ_{Pol} für Aerosole, die bei einem Brand von Matten aus Polyurethanschaum entstanden sind. Der Figur 2 ist deutlich zu entnehmen, dass bei einer Partikelgröße der Aerosole von ≥ ca. 4 µm das Polarisationsmaß σ_{Pol} bei Streuung an Wassertröpfchen signifikant verschieden ist von dem Polarisationsmaß σ_{Pol} an bei Bränden entstandenen Aerosolen 13, 14, 15. Besonders deutlich tritt dieser Unterschied zwischen dem Kurvenverlauf 10 für Wassertröpfchen, die ausschließlich aus Wasser bestehen, und den Kurvenverläufen 13, 14, 15 für bei Bränden entstandenen Aerosolen hervor. Der Kurvenverlauf 11 zeigt, dass bereits geringe Beimischungen von Rußpartikeln zu einer deutlichen Abnahme dieses Unterschiedes führen, insbesondere im Bereich größerer Partikeldurchmesser ab d > ca. 10 µm.

Figur 3 zeigt ein Diagramm, bei welchem die Auftrittswahrscheinlichkeit (Häufigkeit) des berechneten Polarisationsmaßes σ_{Pol} bei verschiedenen Brand- und Nichtbrandversuchen dargestellt ist. Die Werte des Polarisationsmaßes σ_{Pol} wurden anders als in Figur 2 gemessen und nicht simuliert. Figur 3 ist zu entnehmen, dass mithilfe des Polarisationsmaßes σ_{Pol} eine Identifikation von Aerosolen erfolgen kann. Weiterhin kann Figur 3 entnommen werden, dass die Kurvenverläufe in Richtung der x-Achse auch ausreichend deutlich voneinander beabstandet sind, d.h. dass die verschiedenen Aerosole zu deutlich voneinander verschiedenen Werten des Polarisationsmaßes σ_{Pol} führen, sodass eine Falschidentifikation zuverlässig vermieden werden kann, wobei das Bezugszeichen 20 den Kurvenverlauf für Wasserdampf-Aerosole bezeichnet, das Bezugszeichen 21 den Kurvenverlauf für Wassernebel-Aerosole bezeichnet, das Bezugszeichen 22 den Kurvenverlauf für bei einem offenen Holzfeuer entstandene Aerosole bezeichnet, das Bezugszeichen 23 den Kurvenverlauf für bei einem offenen n-Heptan-Feuer entstandene Aerosole bezeichnet, das Bezugszeichen 24 den Kurvenverlauf für bei einem offenen Brand von Matten aus Polyurethanschaum entstandene Aerosole bezeichnet, das Bezugszeichen 25 den Kurvenverlauf für Paraffinöl-Aerosole bezeichnet, das Bezugszeichen 26 den Kurvenverlauf für bei einer Holzpyrolyse entstandene Aerosole bezeichnet und das Bezugszeichen 27 den Kurvenverlauf für bei einem Schwelbrand von Baumwolldochten entstandene Aerosole bezeichnet. Die bei einem offenen Feuer entstandenen Aerosole weisen demnach ein von den anderen Aerosolen deutlich verschiedene Polarisationsmaße auf. Die Polarisationsmaße σ_{Pol} von Wasserdampf 20 und Wassernebel 21 sind ihrerseits deutlich verschieden von den Polarisationsmaßen σ_{Pol} der anderen dargestellten Aerosole. Figur 3 verdeutlicht im Ergebnis ebenfalls, dass mithilfe der erfindungsgemäßen Vorrichtung Aerosole in Form von Wassertröpfchen eindeutig identifiziert werden können. Darüber hinaus können sogar bei offenen Bränden entstandene Aerosole 22, 23, 24 von solchen unterschieden werden, welche bei Schwelbränden bzw. einer Pyrolyse 26, 27 entstehen.

Figur 4 zeigt eine Prinzipskizze der ersten bevorzugten Ausführungsform der erfindungsgemäßen Vorrichtung 100, umfassend eine Lichtemissionseinrichtung 101, welche eine erste Lichtquelle 102 und eine zweite Lichtquelle 103 umfasst. Die erste Lichtquelle 102 weist einen linearen Polarisationsfilter 104 auf, sodass die erste Lichtquelle linear polarisiertes Licht abstrahlt. Die zweite Lichtquelle 103 weist dagegen keinen Polarisationsfilter auf, sodass diese unpolarisiertes Licht abstrahlt. Die erste Lichtquelle 102 und die zweite Lichtquelle 103 sind als Leuchtdioden ausgebildet. Die Lichtemissionseinrichtung 101 weist eine erste optische Achse 105 auf.

Die erste bevorzugte Ausführungsform der erfindungsgemäßen Vorrichtung umfasst ferner eine Lichtdetektionseinrichtung 110, welche ihrerseits zwei Lichtempfänger 111 und 112 umfasst. Der erste Lichtempfänger 111 weist einen linearen Polarisationsfilter 113 auf und der zweite Lichtempfänger 112 weist ebenfalls einen linearen Polarisationsfilter 114 auf. Die Polarisationsebenen der Polarisationsfilter 113, 114 schließen einen Winkel von 90° ein. Die Lichtdetektionseinrichtung 110 weist eine zweite optische Achse 115 auf, welche mit der ersten optischen Achse 105 der Lichtemissionseinrichtung 101 einen Winkel von 35° einschließt.

Die Polarisationsebene des von der ersten Lichtquelle 102 abgestrahlten Lichtes kann parallel zu der durch die erste 105 und zweite optische Achse 115 aufgespannten Ebene orientiert sein, in welchem Fall die Polarisationsebene eines der Polarisationsfilter 113, 114 ebenfalls parallel zu dieser Ebene orientiert ist. Entsprechend ist die Polarisationsebene des anderen Polarisationsfilters der Lichtdetektionseinrichtung 110 senkrecht zu dieser Ebene orientiert. Es ist ebenfalls möglich, dass die Polarisationsebene des Polarisationsfilters 104 der ersten Lichtquelle 102 senkrecht zu der durch die erste 105 und zweite optische Achse 115 aufgespannten Ebene orientiert ist, in welchem Fall die Polarisationsebene eines der Polarisationsfilter 113, 114 ebenfalls senkrecht zu dieser Ebene orientiert ist. Entsprechend ist der andere der beiden Polarisationsfilter 113, 114 der Lichtdetektionseinrichtung 110 parallel zu dieser Ebene orientiert.

Die erste Lichtquelle 102 mit Polarisationsfilter 104 kann durch einen Laser, welcher linear polarisiertes Licht abstrahlt, ersetzt werden.

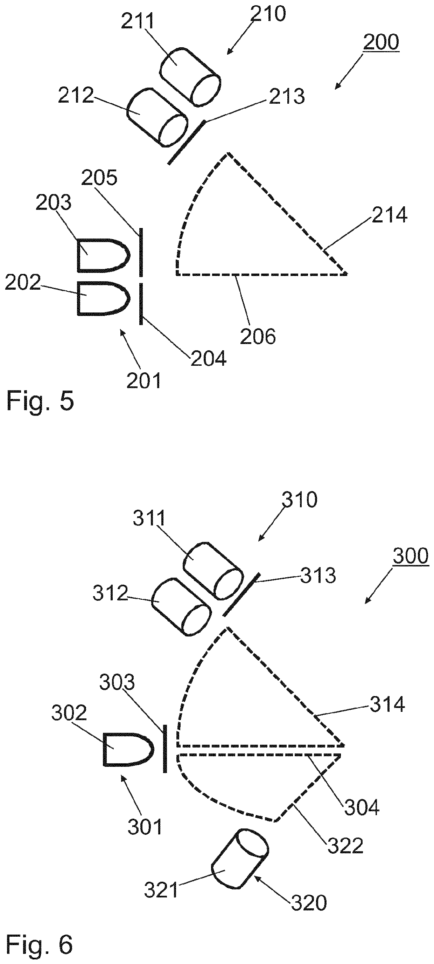

Figur 5 zeigt eine Prinzipskizze einer zweiten bevorzugten Ausführungsform der erfindungsgemäßen Vorrichtung 200. Die zweite bevorzugte Ausführungsform umfasst eine Lichtemissionseinrichtung 201, welche ihrerseits eine erste Lichtquelle 202 und eine zweite Lichtquelle 203 umfasst. Die erste Lichtquelle 202 weist einen linearen Polarisationsfilter 204 auf und die zweite Lichtquelle 203 weist einen linearen Polarisationsfilter 205 auf. Die optische Achse der Lichtemissionseinrichtung ist mit dem Bezugszeichen 206 bezeichnet. Die Polarisationsebene des Polarisationsfilters 204 schließt mit der Polarisationsebene des Polarisationsfilters 205 einen Winkel von 90° ein.

Die zweite bevorzugte Ausführungsform der erfindungsgemäßen Vorrichtung umfasst ferner eine Lichtdetektionseinrichtung 210, welche ihrerseits einen ersten Lichtempfänger 211 und einen zweiten Lichtempfänger 212 umfasst. Einer der beiden Lichtempfänger 211, 212 weist einen linearen Polarisationsfilter 213 auf. Die Lichtdetektionseinrichtung 210 weist ferner eine zweite optische Achse 214 auf. Die erste optische Achse 206 der Lichtemissionseinrichtung 201 und die zweite optische Achse 214 der Lichtdetektionsvorrichtung 210 schließen einen Winkel von 35° ein.

Die Polarisationsebene eines der beiden Polarisationsfilter 204, 205 der Lichtemissionseinrichtung 201 ist parallel zu der durch die erste optische Achse 206 und die zweite optische Achse 214 aufgespannten Ebene orientiert. Entsprechend ist die Polarisationsebene des anderen Polarisationsfilters der Lichtemissionseinrichtung 201 senkrecht zu dieser Ebene orientiert. Die Polarisationsebene des Polarisationsfilters 213 der Lichtdetektionseinrichtung 210 ist senkrecht oder parallel zu dieser Ebene orientiert.

Die Lichtquellen 202, 203 mit Polarisationsfiltern 204, 205 der Lichtemissionseinrichtung 201 können durch Laser ersetzt werden, welche linear polarisiertes Licht abstrahlen, wobei die Polarisationsebene eines Lasers parallel zu der durch die erste optische Achse 206 und die zweite optische Achse 214 aufgespannten Ebene orientiert ist und die Polarisationsebene des anderen Lasers senkrecht zu dieser Ebene orientiert ist.

Figur 6 zeigt eine Prinzipskizze einer dritten bevorzugten Ausführungsform der erfindungsgemäßen Vorrichtung 300. Die Vorrichtung 300 umfasst eine Lichtemissionseinrichtung 301, welche ihrerseits eine erste Lichtquelle 302 mit einem linearen Polarisationsfilter 303 umfasst. Die Lichtemissionseinrichtung 301 weist eine erste optische Achse 304 auf.

Die Vorrichtung 300 umfasst ferner eine erste Lichtdetektionseinrichtung 310 und eine zweite Lichtdetektionseinrichtung 320. Die erste Lichtdetektionseinrichtung 310 umfasst einen ersten Lichtempfänger 311 und einen zweiten Lichtempfänger 312, wobei der erste Lichtempfänger 311 oder der zweite Lichtempfänger 312 einen linearen Polarisationsfilter 313 aufweist. Die erste Lichtdetektionseinrichtung 310 weist eine zweite optische Achse 314 auf. Die Vorrichtung 300 umfasst ferner eine zweite Lichtdetektionseinrichtung 320, welche ihrerseits einen Lichtempfänger 321 umfasst. Die zweite Lichtdetektionseinrichtung 320 weist eine dritte optische Achse 322 auf.

Die erste optische Achse 304 der Lichtemissionseinrichtung 301 schließt mit der zweiten optischen Achse 314 der ersten Lichtdetektionseinrichtung 310 einen Winkel von 35° ein. Ebenso schließt die erste optische Achse 304 der Lichtemissionseinrichtung 301 mit der dritten optischen Achse 322 der zweiten Lichtdetektionseinrichtung 320 einen Winkel von 35° ein. Die Ebene, welche von der ersten optischen Achse 304 und der zweiten optischen Achse 314 aufgespannt wird, ist senkrecht zu der Ebene orientiert, welche durch die erste optische Achse 304 und die dritte optische Achse 322 aufgespannt wird.

Die Polarisationsebene des Polarisationsfilters 303 der Lichtquelle 302 ist senkrecht oder parallel zu der durch die erste optische Achse 304 und die zweite optische Achse 314 aufgespannten Ebene orientiert. Entsprechend ist die Polarisationsebene des Polarisationsfilters 313 parallel oder senkrecht zu dieser Ebene orientiert, sodass die Polarisationsebene des Polarisationsfilters 303 mit der Polarisationsebene des Polarisationsfilters 313 einen Winkel von 90° einschließt.

Die erste Lichtquelle 302 mit Polarisationsfilter 303 kann auch bei dieser dritten Ausführungsform der erfindungsgemäßen Vorrichtung 300 durch einen Laser ersetzt werden, welcher linear polarisiertes Licht abstrahlt, wobei die Polarisationsebene des Laserlichtes parallel oder senkrecht zu der durch die erste optische Achse 304 und die zweite optische Achse 314 aufgespannten Ebene orientiert ist.

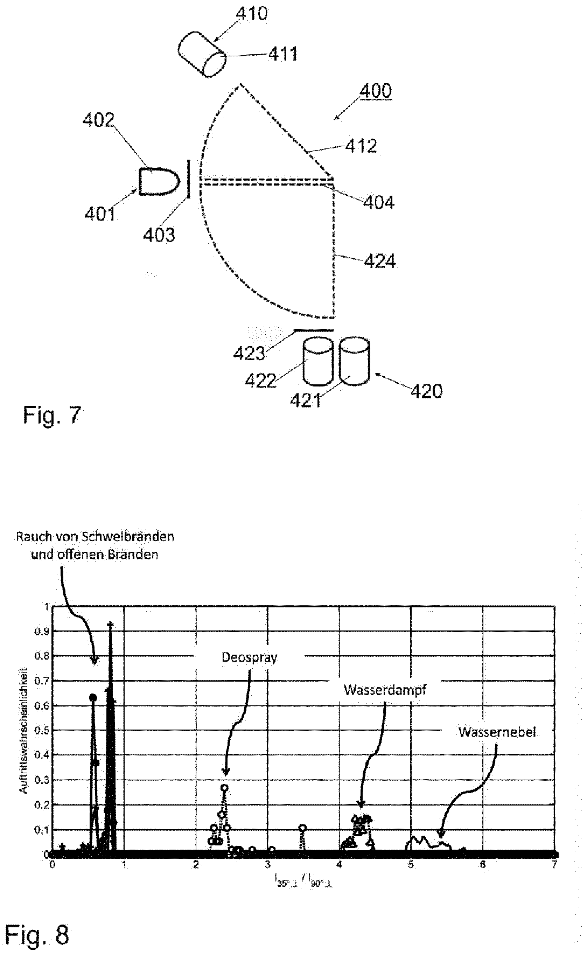

Fig. 7 zeigt eine Prinzipskizze einer nicht erfindungsgemäßen Vorrichtung 400. Die Vorrichtung 400 umfasst eine Lichtemissionsvorrichtung 401, welche eine erste Lichtquelle 402 mit einem linearen Polarisationsfilter 403 aufweist. Die Lichtemissionseinrichtung 401 weist eine erste optische Achse 404 auf.

Die Vorrichtung umfasst ferner eine erste Lichtdetektionseinrichtung 410 und eine zweite Lichtdetektionseinrichtung 420. Die erste Lichtdetektionseinrichtung 410 umfasst einen Lichtempfänger. Die zweite Lichtdetektionseinrichtung 420 umfasst einen ersten Lichtempfänger 421 und einen zweiten Lichtempfänger 422, wobei einer von beiden einen Polarisationsfilter 423 aufweist. Die erste Lichtdetektionseinrichtung 410 weist eine zweite optische Achse 412 auf und die zweite Lichtdetektionseinrichtung weist eine dritte optische Achse 424 auf.

Die erste optische Achse 404 der Lichtemissionseinrichtung 401 schließt mit der zweiten optischen Achse 412 der ersten Lichtdetektionseinrichtung 410 einen Winkel von 35° ein. Dagegen schließt die erste optische Achse 404 der Lichtemissionseinrichtung 401 mit der dritten optischen Achse 424 der zweiten Lichtdetektionseinrichtung 420 einen Winkel von 90° ein.

Die Polarisationsebene des Polarisationsfilters 403 der Lichtquelle 402 ist senkrecht oder parallel zu der durch die erste optische Achse 404 und die zweite optische Achse 412 aufgespannten Ebene orientiert. Entsprechend ist die Polarisationsebene des Polarisationsfilters 423 parallel oder senkrecht zu dieser Ebene orientiert, sodass die Polarisationsebene des Polarisationsfilters 403 mit der Polarisationsebene des Polarisationsfilters 423 einen Winkel von 90° einschließt.

Die erste Lichtquelle 402 mit Polarisationsfilter 403 kann auch bei dieser vierten Ausführungsform der erfindungsgemäßen Vorrichtung 400 durch einen Laser ersetzt werden, welcher linear polarisiertes Licht abstrahlt, wobei die Polarisationsebene des Laserlichtes senkrecht oder parallel zu der durch die erste optische Achse 404 und die zweite optische Achse 412 aufgespannten Ebene orientiert ist.

Fig. 8 zeigt Werte der normierten Auftrittswahrscheinlichkeit von an verschiedenen Aerosolen gestreuten Lichtes als Funktion eines Intensitätenquotienten aus der Intensität senkrecht zur der ersten Lichtquelle polarisierten Lichtes bei 35° (Lichtempfänger 411) und der Intensität senkrecht zur der ersten Lichtquelle polarisierten Lichtes bei 90° (Lichtempfänger 421). Die Abbildung 8 bezieht sich auf das Beispiel, welches in Figur 7 gezeigt ist. Es ist zu sehen, dass der Wert des Intensitätenquotienten bei Rauch zwischen ungefähr 0,5 und 1, bei Wassertröpfchen ungefähr zwischen 4 und 4,5 und bei Wassernebel ungefähr zwischen 4,8 und 5,6 beträgt, d.h. dass die Werte des Intensitätenquotienten bei den verschiedenen Aerosolen deutlich voneinander beabstandet sind. Dies ermöglicht eine zuverlässige Indentifizierung der jeweiligen Aerosole, was sowohl für das Verhältnis von bei Schwelbränden enstandenem Rauch zu Wasserdampf/Wassernebel als auch für das Verhältnis von Wasserdampf/Wassernebel zu von einem Deospray o.ä. emittierten Aerosolen gilt. Letzteres ist besonders bei Anwendungen in Wäscheräumen und Toiletten, wie sie beispielsweise im Bereich der Luftfahrt zu finden sind, relevant.

Mittels des zweiten Lichtempfängers 422 der zweiten Lichtdetektionseinrichtung 420 kann zusätzlich der Depolarisationsgrad σ_{Depol} ermittelt werden und damit eine Identifizierung von Staubpartikeln dergestalt erfolgen, dass durch Brände entstandene Aerosole von nicht durch Brände entstandenen Stäuben unterschieden werden können.

### Bezugszeichenliste

- 1: Messwerte von σ_{Pol}, welche bei verschiedenen Brandaerosolen nach EN-54 erhalten wurden
- 2: Messwerte von σ_{Pol}, welche bei Paraffinölnebel erhalten wurden
- 3: Messwerte von σ_{Pol}, welche bei verschiedenen Stäuben erhalten wurden
- 4: Messwerte von σ_{Pol}, welche bei Wassernebel und Wasserdampf erhalten wurden
- 10: Verlauf von σ_{Pol} für Wasserpartikel
- 11: Verlauf von σ_{Pol} für Wasserpartikel mit Rußanteil
- 12: Verlauf von σ_{Pol} für Paraffinölnebel
- 13: Verlauf von σ_{Pol} für Aerosole, die bei einem Schwelbrand von Baumwolldochten entstanden sind
- 14: Verlauf von σ_{Pol} für Aerosole, die bei einer Holzpyrolyse entstanden sind
- 15: Verlauf von σ_{Pol} für Aerosole, die bei einem Polyurethanfeuer entstanden sind
- 20: Kurvenverlauf von Wasserdampf-Aerosolen
- 21: Kurvenverlauf von Wassernebel-Aerosolen
- 22: Kurvenverlauf für bei einem offenen Holzfeuer entstandene Aerosole
- 23: Kurvenverlauf für bei einem offenen n-Heptan-Feuer entstandene Aerosole
- 24: Kurvenverlauf für bei einem offenen Polyurethanfeuer entstandene Aerosole
- 25: Kurvenverlauf für Praffinöl-Aerosole
- 26: Kurvenverlauf für bei einer Holzpyrolyse entstandene Aerosole
- 27: Kurvenerlauf für bei einem Schwelbrand von Baumwolldochten entstandene Aerosole
- 100: Vorrichtung
- 101: Lichtemissionseinrichtung
- 102: Lichtquelle
- 103: Lichtquelle
- 104: Polarisationsfilter
- 105: optische Achse
- 110: Lichtdetektionseinrichtung
- 111: Lichtempfänger
- 112: Lichtempfänger
- 113: Polarisationsfilter
- 114: Polarisationsfilter
- 115: optische Achse
- 200: Vorrichtung
- 201: Lichtemissionseinrichtung
- 202: Lichtquelle
- 203: Lichtquelle
- 204: Polarisationsfilter
- 205: Polarisationsfilter
- 206: optische Achse
- 210: Lichtdetektionseinrichtung
- 211: Lichtempfänger
- 212: Lichtempfänger
- 213: Polarisationsfilter
- 214: optische Achse
- 300: Vorrichtung
- 301: Lichtemissionseinrichtung
- 302: Lichtquelle
- 303: Polarisationsfilter
- 304: optische Achse
- 310: Lichtdetektionseinrichtung
- 311: Lichtempfänger
- 312: Lichtempfänger
- 313: Polarisationsfilter
- 314: optische Achse
- 320: Lichtdetektionseinrichtung
- 321: Lichtempfänger
- 322: optische Achse
- 400: Vorrichtung
- 401: Lichtemissionseinrichtung
- 402: Lichtquelle
- 403: Polarisationsfilter
- 404: optische Achse
- 410: Lichtdetektionseinrichtung
- 411: Lichtempfänger
- 412: optische Achse
- 420: Lichtdetektionseinrichtung
- 421: Lichtempfänger
- 422: Lichtempfänger
- 423: Polarisationsfilter
- 424: optische Achse

## Patentansprüche

1. Vorrichtung (100, 200, 300) zur Identifikation von Staubpartikeln und Wasserpartikeln, umfassend einen mit der Umgebungsluft der Vorrichtung in Fluidverbindung stehenden Streubereich, eine Lichtemissionseinrichtung (101, 201, 301) mit einer ersten optischen Achse (105, 206, 304), zumindest eine erste Lichtdetektionseinrichtung (110, 210, 310) mit einer zweiten optischen Achse (115, 214, 314) und eine Mess- und Recheneinrichtung, wobei die Lichtemissionseinrichtung (101, 201, 301) ausgelegt ist, Licht in den Streubereich abzustrahlen, und die mindestens eine Lichtdetektionseinrichtung (110, 210, 310) ausgelegt ist, durch Streulichteinfall erzeugte Detektionssignale an die Mess- und Recheneinrichtung zu übertragen, wobei die Lichtemissionseinrichtung (101, 201, 301) wenigstens eine erste Lichtquelle (102, 202, 302), die ausgelegt ist, linear polarisiertes Licht mit einer ersten Polarisationsebene abzustrahlen, umfasst,
**dadurch gekennzeichnet,**
**dass** die erste optische Achse (105, 206, 304) und die zweite optische Achse (115, 214, 314) einen Winkel von 35° ± 3° in Richtung des rückgestreuten Lichtes einschließen,
die Mess- und Recheneinrichtung ausgelegt ist, aus den Detektionssignalen mittels der Bestimmung der Intensitäten Is und Ip den Wert eines Intensitätenquotienten in Form eines Depolarisationsgrades σ_{Depol} zur Identifikation von Staubpartikeln oder in Form eines Polarisationsmaßes σ_{Pol} zur Identifikation von Wasserpartikeln zu berechnen, den Wert mit gespeicherten Werten zu vergleichen und abhängig von dem Vergleich ein Identifikationssignal auszugeben,
wobei das Polarisationsmaß σ_{Pol} gemäß σ_{Pol}=(I_{S}-I_{P})/(I_{S}+I_{P}) berechnet wird, und wobei der Depolarisationsgrad σ_{Depol} gemäß σ_{Depol}=I_{S}/I_{P} oder σ_{Depol}=I_{P}/I_{S} berechnet wird, wobei I_{S} die Intensität des Lichtes ist, welches linear polarisiert ist und eine Polarisationsebene aufweist, die mit der durch die erste (105, 206, 304) und zweite optische Achse (115, 214, 314) aufgespannten Ebene einen Winkel von 90° ± 5° einschließt und wobei I_{P} die Intensität des Lichtes ist, welches linear polarisiert ist, und eine Polarisationsebene aufweist, die mit der durch die erste (105, 206, 304) und zweite optische Achse (115, 214, 314) aufgespannten Ebene einen Winkel von 0° ± 5° einschließt, und
wobei die erste Polarisationsebene des von der ersten Lichtquelle (102, 202, 302) abgestrahlten Lichtes senkrecht oder parallel zu der durch die erste optische Achse (105, 206, 304) und zweite optische Achse (115, 214, 314) aufgespannten Ebene orientiert ist..

2. Vorrichtung (100, 200, 300) nach Anspruch 1, **dadurch gekennzeichnet,dass** die erste optische Achse (105, 206, 304) und die zweite optische Achse (115, 214, 314) einen Winkel von 35° ± 1° in Richtung des rückgestreuten Lichtes einschließen.

3. Vorrichtung nach Anspruch 1 oder 2, **dadurch gekennzeichnet, dass** die Lichtemissionseinrichtung (101) eine zweite Lichtquelle (103) umfasst, wobei die zweite Lichtquelle (103) ausgelegt ist, unpolarisiertes Licht abzustrahlen, und die erste Lichtdetektionseinrichtung (110) einen ersten Lichtempfänger (111) und einen zweiten Lichtempfänger (112) mit jeweils einem linearen Polarisationsfilter umfasst, wobei die Polarisationsebene eines Polarisationsfilters mit der durch die erste (105) und zweite optische Achse (115) aufgespannten Ebene einen Winkel von 90° ± 5° einschließt und die Polarisationsebene des anderen Polarisationsfilters mit der durch die erste (105) und zweite optische Achse (115) aufgespannten Ebene einen Winkel von 0° ± 5° einschließt.

4. Vorrichtung nach Anspruch 1 oder 2, **dadurch gekennzeichnet, dass** die Lichtemissionseinrichtung (201) eine zweite Lichtquelle (203) umfasst, welche ausgelegt ist, linear polarisiertes Licht abzustrahlen, wobei die Polarisationsebene des von der zweiten Lichtquelle (203) abgestrahlten Lichtes mit der ersten Polarisationsebene des von der ersten Lichtquelle (202) abgestrahlten Lichtes einen Winkel von 90° ± 5° einschließt, und die erste Lichtdetektionseinrichtung (210) einen ersten Lichtempfänger (212) mit einem linearen Polarisationsfilter und einen zweiten Lichtempfänger (211) umfasst, wobei die Polarisationsebene des Polarisationsfilters mit der durch die erste (206) und zweite optische Achse (214) aufgespannten Ebene einen Winkel von 90° ± 5° oder 0° ± 5° einschließt.

5. Vorrichtung nach Anspruch 1 oder 2, **dadurch gekennzeichnet, dass** eine zweite Lichtdetektionseinrichtung (320) mit einer dritten optischen Achse (322) und zumindest einem Lichtempfänger (321) vorhanden ist,
wobei die durch die erste optische Achse (304) und dritte optische Achse (322) aufgespannte Ebene mit der durch die erste optische Achse (304) und zweite optische Achse (322) aufgespannten Ebene einen Winkel von 90° ± 5° einschließt,
wobei die erste optische Achse (304) mit der dritten optischen Achse (322) einen Winkel von 35° ± 5° ° in Richtung des rückgestreuten Lichtes einschließt,
wobei die erste Lichtdetektionseinrichtung (310) einen ersten Lichtempfänger (311) und einen zweiten Lichtempfänger (312) umfasst, von denen einer einen Polarisationsfilter aufweist, dessen Polarisationsebene mit der Polarisationsebene des von der ersten Lichtquelle (302) abgestrahlten Lichtes einen Winkel von 90° ± 5°einschließt.

6. Vorrichtung nach Anspruch 1 oder 3, **dadurch gekennzeichnet, dass** die erste Lichtquelle (102, 202) und die zweite Lichtquelle (103, 203) im Zeitmultiplex arbeiten.

7. Vorrichtung nach Anspruch 1 oder 4, **dadurch gekennzeichnet, dass** die erste Lichtquelle (102, 202, 302) oder die zweite Lichtquelle (203) aus einer Leuchtdiode mit Polarisationsfilter oder einem Laser, insbesondere einer Laserdiode, bestehen.

8. Vorrichtung nach Anspruch 3, 4 oder 5, **dadurch gekennzeichnet, dass** der erste (111, 211, 311) zweite (112, 212, 312) und/oder dritte Lichtempfänger (321) eine Fotodiode ist.

9. Vorrichtung nach Anspruch 3, 4, 5 oder 7, **dadurch gekennzeichnet, dass** die Polarisationsfilter eine Flüssigkeitskristallanordnung sind.

10. Vorrichtung nach Anspruch 1, **dadurch gekennzeichnet, dass** das von der Lichtemissionseinrichtung (101, 201, 301) abgestrahlte Licht Licht des sichtbaren Bereiches des Spektrums oder Licht des nahen Infrarotbereiches des Spektrums oder weißes Licht ist.

11. Verwendung der Vorrichtung nach einem der vorhergehenden Ansprüche bei der Detektion von Bränden, wobei die Vorrichtung in ein Gehäuse integriert ist.

## Claims

1. Apparatus (100, 200, 300) for identifying dust particles and water particles comprising a scattering region in fluid communication with ambient air of the apparatus, light emitting means (101, 201, 301) having a first optical axis (105, 206, 304) at least one first light detecting means (110, 210, 310) having a second optical axis (115, 214, 314), and a measuring and computing means, wherein said light emitting means (101, 201, 301) is adapted to emit light into said scattering region, and said at least one light detecting means (110, 210, 310) is designed to transmit detection signals generated by scattered light incidence to the measuring and computing device, wherein the light emission device (101, 201, 301) comprises at least one first light source (102, 202, 302) which is designed to emit linearly polarized light with a first plane of polarization, and wherein the measuring and computing device is designed to calculate a value of an intensity quotient from the detection signals, to compare the value with stored values and to output an identification signal depending on the comparison,
**characterized in that**
the first optical axis (105, 206, 304) and the second optical axis (115, 214, 314) enclose an angle of 35° ± 3° in the direction of the backscattered light,
the measuring and computing device is designed to calculate from the detection signals by means of the determination of the intensities Is and Ip the value of an intensity quotient in the form of a degree of depolarization σ_{Depol} for the identification of dust particles or in the form of a polarization measure σ_{Po}l for the identification of water particles, to compare the value with stored values and to output an identification signal depending on the comparison, wherein the polarization measure σ_{Pol} is calculated according to σ_{Pol}= (Is-Ip)/(Is+Ip), and wherein the degree of depolarization σ_{Depol} is calculated according to σ_{Depol} = Iₛ/Iₚ or σ_{Depol}=Ip/Is, where Is is the intensity of light which is linearly polarized and has a plane of polarization which includes an angle of 90° ± 5° with the plane spanned by the first (105, 206, 304) and second optical axes (115, 214, 314) and where Ip is the intensity of the light which is linearly polarized and has a plane of polarization which includes an angle of 0° ± 5° with the plane spanned by the first (105, 206, 304) and second optical axes (115, 214, 314), and
wherein the first plane of polarization of the light emitted by the first light source (102, 202, 302) is oriented perpendicular or parallel to the plane spanned by the first optical axis (105, 206, 304) and second optical axis (115, 214, 314).

2. The device (100, 200, 300) according to claim 1, **characterized in that** the first optical axis (105, 206, 304) and the second optical axis (115, 214, 314) include an angle of 35° ± 1° in the direction of the backscattered light.

3. Apparatus according to claim 1 or 2, **characterized in that** said light emitting means (101) comprises a second light source (103), said second light source (103) being adapted to emit unpolarized light, and said first light detecting means (110) comprises a first light receiver (111) and a second light receiver (112) each having a linear polarization filter, wherein the plane of polarization of one polarization filter includes an angle of 90° ± 5° with the plane spanned by the first (105) and second optical axes (115) and the plane of polarization of the other polarization filter includes an angle of 0° ± 5° with the plane spanned by the first (105) and second optical axes (115).

4. Apparatus according to claim 1 or 2, **characterized in that** the light emitting means (201) comprises a second light source (203) adapted to emit linearly polarized light, wherein the plane of polarization of the light emitted by the second light source (203) includes an angle of 90° ± 5° with the first plane of polarization of the light emitted by the first light source (202), and the first light detection device (210) comprises a first light receiver (212) with a linear polarization filter and a second light receiver (211), wherein the polarization plane of the polarization filter includes an angle of 90° ± 5° or 0° ± 5° with the plane spanned by the first (206) and second optical axis (214).

5. Apparatus according to claim 1 or 2, **characterized in that** a second light detection device (320) with a third optical axis (322) and at least one light receiver (321) is provided, wherein the plane spanned by the first optical axis (304) and third optical axis (322) includes an angle of 90° ± 5° with the plane spanned by the first optical axis (304) and second optical axis (322),
wherein the first optical axis (304) includes an angle of 35° ± 5° with the third optical axis (322) in the direction of the backscattered light,
wherein the first light detection device (310) comprises a first light receiver (311) and a second light receiver (312), one of which has a polarization filter whose plane of polarization includes an angle of 90° ± 5° with the plane of polarization of the light emitted by the first light source (302).

6. Apparatus according to claim 1 or 3, **characterized in that** the first light source (102, 202) and the second light source (103, 203) operate in time division multiplex.

7. Device according to claim 1 or 4, **characterized in that** the first light source (102, 202, 302) or the second light source (203) consist of a light emitting diode with polarization filter or a laser, in particular a laser diode.

8. A device according to claim 3, 4 or 5, **characterized in that** the first (111, 211, 311), second (112, 212, 312) and/or third light receiver (321) is a photodiode.

9. A device according to claim 3, 4, 5 or 7, **characterized in that** the polarization filters are a liquid crystal array.

10. The apparatus of claim 1, **characterized in that** the light emitted by the light emitting means (101, 201, 301) is light of the visible region of the spectrum or light of the near infrared region of the spectrum or white light.

11. Use of the device according to any one of the preceding claims in the detection of fires, wherein the device is integrated in a housing.

## Revendications

1. Dispositif (100, 200, 300) d'identification de particules de poussière et de particules d'eau, comprenant une zone de diffusion en liaison fluidique avec l'air environnant du dispositif, un dispositif d'émission de lumière (101, 201, 301) doté d'un premier axe optique (105, 206, 304), au moins un dispositif de détection de lumière (110, 210, 310) doté d'un deuxième axe optique (115, 214, 314) et un dispositif de mesure et de calcul, le dispositif d'émission de lumière (101, 201, 301) étant conçu pour irradier de la lumière dans la zone de diffusion, et l'au moins un dispositif de détection de lumière (110, 210, 310) étant conçu pour transférer des signal de détection générés par incidence de lumière diffuse au dispositif de mesure et de calcul, le dispositif d'émission de lumière (101, 201, 301) comprenant au moins une première source lumineuse (102, 202, 302) qui est conçue pour irradier la lumière polarisée linéairement avec un premier plan de polarisation,
**caractérisé en ce que**
le premier axe optique (105, 206, 304) et le deuxième axe optique (115, 214, 314) circonscrivent un angle de 35° ± 3° en direction de la lumière rétrodiffusée,
le dispositif de mesure et de calcul est conçu pour, à partir des signaux de détection, au moyen de la détermination des intensités Is et Ip, calculer la valeur d'un quotient d'intensité sous forme d'un degré de dépolarisation σ_{Depol} pour l'identification de particules de poussière ou sous forme d'une cote de polarisation σ_{Pol} ou l'identification de particules d'eau, comparer la valeur avec des valeurs enregistrées et, en fonction de la comparaison, émettre un signal d'identification,
la cote de polarisation σ_{Pol} étant calculée suivant σ_{Pol}=(Iₛ-Iₚ)/(Iₛ+Iₚ), et le degré de dépolarisation σ_{Depol} étant calculé suivant σ_{Depol}=Iₛ/Iₚ ou σ_{Depol}=Iₚ/Iₛ, Iₛ étant l'intensité de la lumière qui est polarisée linéairement et présentant un plan de polarisation qui circonscrit avec le plan sous-tendu par le premier (105, 206, 304) et le deuxième (115, 214, 314) axe optique un angle de 90° ± 5° et Iₚ étant l'intensité de la lumière qui est polarisée linéairement, et présentant un plan de polarisation qui circonscrit avec le plan sous-tendu par le premier (105, 206, 304) et le deuxième (115, 214, 314) axe optique un angle de 0° ± 5°, et
le premier plan de polarisation de la lumière irradiée par la première source lumineuse (102, 202, 302) étant orienté perpendiculairement ou parallèlement au plan sous-tendu par le premier (105, 206, 304) et deuxième (115, 214, 314) axe optique.

2. Dispositif (100, 200, 300) selon la revendication 1, **caractérisé en ce que** le premier axe optique (105, 206, 304) et le deuxième axe optique (115, 214, 314) circonscrivent un angle de 35° ± 1° en direction de la lumière rétrodiffusée.

3. Dispositif selon la revendication 1 ou 2, **caractérisé en ce que** le dispositif d'émission de lumière (101) comprend une seconde source lumineuse (103), la seconde source lumineuse (103) étant conçue pour irradier de la lumière non polarisée, et que le premier dispositif de détection de lumière (110) comprend un premier récepteur de lumière (111) et un second récepteur de lumière (112) dotés respectivement d'un filtre de polarisation linéaire, le plan de polarisation d'un filtre de polarisation circonscrivant avec le plan sous-tendu par le premier (105) et deuxième (115) axe optique circonscrivant un angle de 90° ± 5° et le plan de polarisation de l'autre filtre de polarisation circonscrivant avec le plan sous-tendu par le premier (105) et le deuxième (115) axe optique un angle de 0° ± 5°.

4. Dispositif selon la revendication 1 ou 2, **caractérisé en ce que** le dispositif d'émission de lumière (201) comprend une seconde source lumineuse (203) qui est conçue pour irradier de la lumière polarisée linéairement, le plan de polarisation de la lumière irradiée par la seconde source lumineuse (203) circonscrivant avec le premier plan de polarisation de la lumière irradiée par la première source lumineuse (202) un angle de 90° ± 5°, et le premier dispositif de détection de lumière (210) comprenant un premier récepteur de lumière (212) doté d'un filtre de polarisation linéaire et un second récepteur de lumière (211), le plan de polarisation du filtre de polarisation circonscrivant avec le plan sous-tendu par le premier (206) et deuxième (214) axe optique un angle de 90° ± 5° ou 0° ± 5°.

5. Dispositif selon la revendication 1 ou 2, **caractérisé en ce qu'**un second dispositif de détection de lumière (320) doté d'un troisième axe optique (322) et d'au moins un récepteur de lumière (321) est disponible, le plan sous-tendu par le premier (304) et le troisième (322) axe optique circonscrivant avec le plan sous-tendu par le premier (304) et deuxième (322) axe optique (322) un angle de 90° ± 5°,
le premier axe optique (304) circonscrivant avec le troisième axe optique (322) un angle de 35° ± 5° en direction de la lumière rétrodiffusée,
le premier dispositif de détection de lumière (310) comprenant un premier récepteur de lumière (311) et un second récepteur de lumière (312) parmi lesquels un présente un filtre de polarisation dont le plan de polarisation circonscrit avec le plan de polarisation de la lumière irradiée par la première source lumineuse (302) un angle de 90° ± 5°.

6. Dispositif selon la revendication 1 ou 3, **caractérisé en ce que** la première source lumineuse (102, 202) et la seconde source lumineuse (103, 203) fonctionnent en multiplex temporel.

7. Dispositif selon la revendication 1 ou 4, **caractérisé en ce que** la première source lumineuse (102, 202, 302) ou la seconde source lumineuse (203) consistent en une diode électroluminescente dotée d'un filtre de polarisation ou d'un laser, en particulier une diode laser.

8. Dispositif selon la revendication 3, 4 ou 5, **caractérisé en ce que** le premier (111, 211, 311), deuxième (112, 212, 312) et/ou troisième récepteur de lumière (321) est une photodiode.

9. Dispositif selon la revendication 3, 4, 5 ou 7, **caractérisé en ce que** les filtres de polarisation sont un dispositif à cristaux liquides.

10. Dispositif selon la revendication 1, **caractérisé en ce que** la lumière irradiée par le dispositif d'émission de lumière (101, 201, 301) de la plage visible du spectre ou de la lumière de la plage infrarouge proche du spectre ou de la lumière blanche.

11. Utilisation du dispositif selon une des revendications précédentes pour la détection d'incendie, le dispositif étant intégré dans un boîtier.
